# EUROPEAN PATENT SPECIFICATION

(11) **EP 2 024 567 B1**
(45) Date of publication and mention of the grant of the patent: **28.08.2013**
(21) Application number: 07746552.4
(22) Date of filing: 17.05.2007
(51) Int. Cl.: D21H 27/20

(54) **EARTHEN-WALLPAPER**
TONTAPETE
PAPIER PEINT À BASE DE TERRE

(30) Priority: 18.05.2006 KR 20060044664
(43) Date of publication of application: 18.02.2009
(73) Proprietor: Lee, Jong Hak, Suwon-city 442-400 (KR)
(72) Inventor: Lee, Jong Hak, Suwon-city 442-400 (KR)
(74) Representative: Scheele, Friedrich
(86) International application number: PCT/KR2007/002404
(87) International publication number: WO 2007/136191

(56) References cited:
- JP-A- 11 323 796
- KR-A- 950 018 950
- US-A- 5 160 582

## Description

### [Technical Field]

The present invention relates to earthen wallpaper which can maximize energy radiation (far infrared, etc.) by a wide surface area of ocher and/or a soil mixture and its micropores (a structure of earthen vessel, earthenware pot, etc.), which can promote air permeability (ventilation), filter purification, control of temperature or humidity, emission of far infrared rays, etc., through the micropores, whose color can be changed according to contained components with anti-bacteria, deodorization, increase of radiated energy, etc., and which can make work of wallpapering easy.

### [Background Art]

Conventionally, there are developed sheets for realizing effects of ocher, etc., by providing ocher layers, etc., for wallpapers, pads, hygienic pads, etc. Such developed sheets using ocher, or other healthful mixture (gold, silver, copper, aluminium, charcoal, mugwort, tourmalin, white earth, jade, elvan stone, etc.,) are mostly manufactured by coating, painting, or impregnating or dyeing the mixture on fiber material, wallpaper, etc,

However, products manufactured in such a manufacturing method has a problem in that, since the ocher or the mixture exists only on the fiber material or paper, a layer of the ocher or the mixture is thin and effects of the ocher or the mixture can not be sufficiently achieved.

If the layer becomes thick, pliability or easiness of cutting in the sheet material, wallpapers, etc., is deteriorated and thus, the general purpose characteristic is also lowered.

Furthermore, another problem is that the mixture layer is separated from the fiber material, paper, etc., after a long time has passed. That is, the ocher and/or its mixture becomes a different existence separated from the fiber material, paper, etc.
JP 11323796 A discloses a liquid composition composed of 3-70 wt.% (in terms of solid component) of colloidal inorganic material such as colloidal silica or alumina having a particle diameter of 0.005-0.05 µm and/or inorganic fine particles such as silver-supporting zeolite having a particle diameter of 0.01-50 µm and 5-50 wt.% of a ceramic-forming raw material such as a metal alkoxide and/or a metal hydroxide, e.g. CH3 Si(OCH3)3 is prepared by using an organic solvent such as isopropanol, A wall paper is produced by applying the liquid composition to a substrate for wall paper and subjecting to sol-gel process comprising the curing under heating at a low temperature or under normal temperature to form a ceramic layer having a thickness of 5-200 µm, preferably 10-100 µm.
US 5,160,582 discloses bulky processed sheets which are obtained from mixtures of crosslinked pulp and hot water-soluble fibers, or crosslinked pulp, thermally fusible fibers and binders. The sheets may be embossed by hot pressing them in a wet state and may be treated with flame retardants. The bulky sheets which may be embossed or treated with retardants have wide utilily in various fields.

### Disclosure of Invention

### Technical Problem

Accordingly, the present invention is made in order to solve the above problems, and one object of the present invention is to provide earthen wallpaper which can maximize energy radiation (far infrared, etc.) by a wide surface area of ocher and/or a soil mixture and its micropores as in a structure of an earthen vessel, an earthenware pot, etc., which can promote ventilation, filter purification, control of temperature or humidity, emission of far infrared rays, etc., through the micropores, whose color can be changed according to contained components with anti-bacteria, deodorization, increase of radiated energy, etc., and which can make work of wallpapering easy.

### Technical Solution

To accomplish the object of this invention, earthen wallpaper is provided in accordance with one embodiment of the present invention, which is characterized by comprising a first material in 60-95 % by weight selected from the group of natural mineral powders of 200-1000 mesh consisting of ocher, ocher ceramic (ocher processed at a high temperature above 1,000°C), talcum, jade, purple jade, white earth, zeolite, elvan stone , and a mixture of two or more thereof (referred to as a soil mixture below), a second material of a short fiber fabric in 3-35 wt%, and a water-soluble or natural bonding agent in 2-5 wt% remained as a non-volatile component after drying.

### Advantageous Effects

By virtue of the configuration and acting of the earthen wallpaper according to the above embodiment of the present invention, it has porosity basically and therefore, it has functions such as blockage of harmful toxicity of cement, filter purification, control of temperature or humidity, emission of far infrared rays, blockage of electromagnetic waves, prevention from spreading of flame and emitting of toxic gas in a fire, ventilation, etc., through micropores thereof. And, the earthen wallpaper can be changed in color according to contained components with anti-bacteria, deodorization, increase of radiated energy, etc., and can make work of wallpapering easy. Furthermore, it has other effects that its manufacturing time can be shortened since its manufacturing method is not affected by air bubbles in ocher and its mixture and therefore the earthen wallpaper can be used just after being mixed and dried with no need to be ripened for removing the air bubbles, or the like.

### Brief Description of the Drawings

Fig. 1 is a general block diagram for explaining one embodiment of a method of manufacturing earthen wallpaper according to the present invention.

Fig. 2 is a schematical construction drawing for explaining one embodiment of an apparatus for manufacturing earthen wallpaper according to the present invention.

Figs. 3 and 4 are perspective views illustrating the external shape of each earthen wallpaper according to each embodiment of the present invention.

Fig. 5 is a partially-enlarged section view of the earthen wallpaper according to the embodiment of the present invention.

Fig. 6 is a general block diagram for explaining another embodiment of a method of manufacturing earthen wallpaper according to the present invention.

Fig. 7 is a schematical construction drawing for explaining another embodiment of an apparatus for manufacturing earthen wallpaper according to the present invention.

Fig. 8 is a schematical construction drawing for explaining further another embodiment of an apparatus for manufacturing earthen wallpaper according to the present invention.

Figs. 9 and 10 are schematical construction drawings for explaining further other embodiments of an apparatus for manufacturing earthen wallpaper according to the present invention.

### Mode for the Invention

Now, preferred embodiments of the present invention will be described in detail with reference to the accompanying drawings.

Earthen wallpaper according to one embodiment of the present invention comprises a first material (1) in 60-95 % by weight, a second material (2) of a short fiber fabric in 3-35 wt%, and a water-soluble or natural bonding agent in 2-5 wt% remained as a non-volatile component after drying. The first material (1) is selected from the group of natural mineral powders consisting of ocher, ocher ceramic (ocher processed at a high temperature above 1,000°C), talcum, jade, purple jade, white earth, zeolite, elvan stone, and a mixture of two or more thereof (referred to as a soil mixture below), whose particle sizes are 200-1000 mesh.

The mixture is one kind of a soil mixture which is healthful mineral powder for a human body. Such a first material (1) comprises micropores and has a wide surface area of ocher and/or a soil mixture in its characteristics as in a porous structure of an earthen vessel, an earthenware pot, etc., which is made of soil, thereby maximizing energy radiation (far infrared, etc.). Thus, the first material (1) in the earthen wallpaper can promote air permeability, filter purification, control of temperature or humidity, emission of far infrared rays, etc., through the micropores, can be changed in color according to contained components with anti-bacteria, deodorization, increase of radiated energy, etc., and can make work of wallpapering easy.

When earthen wallpaper manufactured using the natural mineral powder of a bigger particle size than 200 mesh is attached to a wall, and in case a person leans on the wall, or children brush by the wall during playing or jumping in the room, threads of the cloth which people get on tear apart, or scar occurs to a soft skin of a child. For example, various experiments are performed by covering a wall with the earthen wallpaper of silk cloth having a surface area of 5□*5□ and brushing by the wall, their results are as follows. In case the particles of the first material (1) are bigger than 100 mesh, the area of threads torn apart is shown to be about 50% of the whole surface area, and the number of the torn-apart threads having the height above 1mm are shown to be 5 or more. Furthermore, in case the particles of the first material (1) are 150 mesh in size, the area of threads torn apart is shown to be about 15% of the whole surface area, and the number of the torn-apart threads having the height above 1mm are shown to be below 1(including zero). Still furthermore, in case the particles of the first material (1) are 200 mesh in size, the area of threads torn apart is shown to be below about 2% of the whole surface area, and the number of the torn-apart threads having the height above 1mm are shown to be zero.

Therefore, the first material (1) is preferably limited to the natural mineral powder smaller than 200 mesh in particle size.

Moreover, although production is possible using the natural mineral powder up to 10 □ in particle size as the first material (1), it is preferred that the first material (1) be limited to the natural mineral powder bigger than 1,000 mesh in particle size economically since manufacturing cost is abruptly increased due to increase in process for making a smaller natural mineral powder than 1,000 mesh in particle size.

The second material (2) can be rayon, diaper, other sanitary fiber, etc., as short fiber fabrics. Such short fiber fabrics can make the product maintained uniformly during transportation among later-mentioned manufacturing processes, while long fiber fabrics cannot make the product maintained uniformly because shrinkage occurs during transportation.

The reason that the first material (1) is 60-95 wt%, the second material (2) 3-35 wt%, and the remained bonding agent 2-5 wt% is as follows. That is, the reason that a content of the first material (1) or the soil mixture is above 60 wt% is because, in the soil mixture less than 60 wt%, surface characteristics as a soil plaster finish or an earthen vessel, which are characteristics of the earthen wallpaper are not formed in view of dyeing or coating extent. If the bonding agent is increased in proportion, surface shape is shown as chemical vinyl, rubber, etc., and the soil mixture of the first material (1) is thickly covered by the bonding agent, and thus it is difficult to function as the soil mixture. Moreover, in case a content of the soil mixture or the first material (1) is over 95 wt%, the binding force between the soil mixture or the first material (1) and the short fiber fabric or the second material (2) is decreased, thereby the powder of the soil mixture or the soil mixture being separated and stability as a product being decreased.

More explanation based on more concrete experiment results will be followed. In case products are manufactured using the first material (1) of the natural mineral powder in 62 wt% and 60 wt% of the product weight, each exposed surface of the short fiber fabric is 4∼6% and 14∼18% in area. Meanwhile, in case products are manufactured using the first material (1) of the natural mineral powder in 58 wt% of the product weight, an exposed surface area of the short fiber fabric is abruptly increased to more than 38%, and thus an exposed surface area of the first material (1) or the natural mineral powder becoming decreased and their functions being blocked by the short fiber fabric. Therefore, in this case, the functions by the natural mineral powder become remarkably decreased.

Further, the reason to increase the exposed surface area of the short fiber fabric in case a product is manufactured using the first material (1) of the natural mineral powder below 60 wt% of the product weight can be concluded to be because the natural mineral powder or the soil mixture is deeply permeated into the second material (2) through the front and rear surface of the second material (2) during the manufacturing processes.

Furthermore, since the binding force between the soil mixture or the first material (1) and the short fiber fabric or the second material (2) is decreased in case a content of the soil mixture or the first material (1) is over 95 wt%, the scattering rate of the first material (1) is abruptly increased above 10% when the product is brushed or tears. That is, in case a content of the first material (1) is 90 wt%, the scattering rate is shown to be zero. In case each content of the first material (1) is 93 wt% and 95 wt%, the scattering rate is shown to be below 2 wt% and 8-10 wt%, respectively. However, in case each content of the first material (1) is 97 wt%, the scattering rate is shown to be above 35 wt%. Therefore, a content of the first material (1) is preferably limited to the scope of 60-95 wt%.

In case of using a natural bonding agent only, the bonding agent can be disappeared during the drying process or in the course of time, and in case of using a water-soluble bonding agent only, the visual characteristics of ocher or the soil mixture as a product is not satisfactory. Therefore, the ratio of mixing the natural bonding agent and the water-soluble bonding agent is preferably 1-2.5 : 1. Also, by using the mixture of the natural bonding agent and the water-soluble bonding agent as mentioned above, pasting and wallpapering become easy, and scattering of the first material (1) or the soil mixture from the second material (2) or the short fiber fabric is prevented.

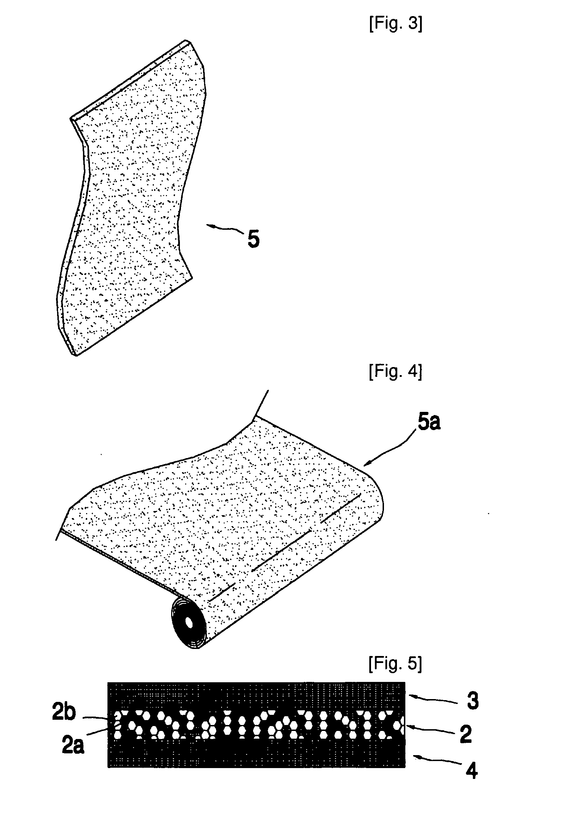

By a later-mentioned manufacturing method, the second material (2) is dipped in the mixture solution of the first material (1) and the bonding agent, which is permeated into the inside of the second material (2) and compressively covers opposite surfaces of the second material (2), and then the first material (1) and the second material (2) as one body are dried. The dried product or the earthen wallpaper comprises the first material (1) and the second material (2) combined in one body, the first material (1) being able of being divided into front and rear first material layers (3,4) covering the opposite surfaces of the second material (2) and a permeated first material layer (2a) penetrated between fibrous elements (2b) of the second material (2), as shown in Fig. 5. Thus, the binding force between the first material (1) and the second material (2) becomes strong, thereby having advantages that separation between them never occurs, or the like. Also, a color and a quality of an earthen wallpaper, and levels in emission of far infrared rays, control of a temperature or a humidity and absorption of electromagnetic waves can vary according to a kind or proportion of the first material.

In a color of the earthen wallpaper, a white color of a short fiber fabric or the second material (2) prior to processing is changed to an ocher yellow color, in case of using ocher only as the first material (1), is changed to a red brick color, in case of using ocher ceramic (ocher processed at a high temperature above 1,000°C), and is changed to a yellow-like or a red-like color according to the mixing amount, in case of mixing ocher and jade, white earth, etc. In addition, in case of using a white earth, jade, etc., a white-like or branny color is appeared. In case of containing later-mentioned natural mineral powders and/or plant powders or their extracts as the first material (1), more various colors are shown. For example, in case of comprising green tea, a green (green-like) color as a natural color is added, and in case of comprising charcoal, etc., a black (black-like) color as a natural color is added. A gray-stone color is shown in case of containing ceramic or elvan stone, a rat-gray color is shown in case of containing ocher, elvan stone, zeolite, ceramic, charcoal, etc., and, in case of containing ocher, white earth, jade, etc., a yellow color, a pink color or a flesh color is shown according to their proportions. In case of containing the extracts of flowers or fruits, etc., colors appeared by flowers, fruits, etc., are added, and in case of containing herb oil, etc., a color is not almost changed although it is used for perfume.

As the first material (1), natural mineral powders such as illite, silver, gold, copper, etc., and plant powders of green tea, charcoal (bamboo, oak, etc.), and herb or their extracts can be added to the soil mixture. In additional desirable functions according to the addition, charcoal (bamboo, oak, etc.) promotes deodorization and anti-bacteria effects and changes its basic color to a black/gray-like color. Powders or extracts of herb such as green tea, a mugwort, etc., add perfume, thereby promoting mental stability (an aromatherapy effect), and also add a green-like or blue-like color to a basic color. In case of powders such as illite, etc., prevention function from spreading of flame and radiation energy such as far infrared rays, anions, etc., are promoted and in color an illite-like color is added to a basic color. In case of powders such as silver, etc., anti-bacteria effect is increased and in color a silver-graylike color is added to a basic color. In case of metal powders such as gold, copper, aluminum, iron, etc., effects of absorption/blockage/diffraction/refraction of electromagnetic waves are increased and in color gold-like, copper-like, aluminum-like, and/or iron-like colors are added to a basic color. In case of powders such as nano-silver, etc., anti-bacteria effect is increased and in color is not changed.

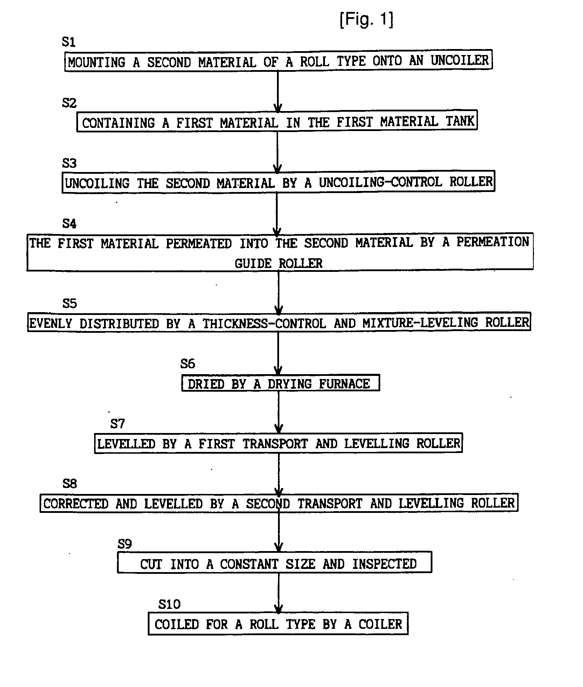

One embodiment of a method of manufacturing earthen wallpaper according to the present invention using the first material (1), the second material (2) and the bonding agent of above configuration is similar to ones disclosed in Korean Patent No. 10-509,454(registered on August 12, 2005) issued to the same applicant, and is illustrated with reference to Figs. 1, 2, 6 to 10 as follows.

First, in a fundamental method of manufacturing earthen wallpaper, 60-95 wt% of a first material (1) selected from the group of natural mineral powders of 200-1000 mesh consisting of ocher, ocher ceramic (ocher processed at a high temperature above 1,000°C), talcum, jade, purple jade, white earth, zeolite, elvan stone, and a mixture of two or more thereof (referred to as a soil mixture below) is mixed in the water-soluble bonding agent solution and a starch and seaweed solution with a proper proportion. Here, natural mineral powders such as illite, silver, gold, copper, etc., and plant p owders of green tea, charcoal (bamboo, oak, etc.), and herb or their extracts can be added to the mixture solution of the first material (1) and bonding agent for additional desirable functions.

3-35 wt% of the second material (2) of short fiber fabrics such as rayon, diaper, other sanitary fiber, etc., is dipped in the mixture solution of the first material (1) and the bonding agent, which is permeated into the second material (2) and compressively united even to opposite surfaces of the second material (2). Then, in the non-interference drying step, the first material (1) applied to, and permeated into, the second material (2) is dried at a temperature of 80°C∼180°C on condition that any interference by at least external force, hot wind, etc., does not exist so that the first material (1) permeated into and applied to the second material (2) does not flow, and until at least fluid and adhesion of the first material (1) does not occur.

The earthen wallpaper manufactured by the above method comprises the first material (1) and the second material (2) combined in one body, the first material (1) being able of being divided into front and rear first material layers (3,4) covering the opposite surfaces of the second material (2) and a permeated first material layer (2a) penetrated between fibrous elements (2b) of the second material (2), as shown in Fig. 5.

Thus, the earthen wallpaper has superior pliability and easiness of cutting, thereby being able to use even as other purposes than wallpaper.

Also, as far as physical force is not added, the first material (1) made of the soil mixture is not separated from the second material (2) although the earthen wallpaper is dipped in water for a long time, and the earthen wallpaper can be maintained in an original shape at natural drying and even at heat drying, and thus any type of bonding is facilitated. And, since an adhesive agent of any purpose sticks well to the earthen wallpaper, the earthen wallpaper can be used even as many purposes such as underlining and surface wallpaper for a wall, a ceiling, etc.

Furthermore, the second material (2) is dipped in the first material (1) and the first material (1) is permeated into an inner space (gap) of the second material (2), which are not affected by air bubbles in ocher and its mixture. Therefore, the earthen wallpaper can be used just after being mixed and dried with no need to be ripened for removing the air bubbles, and thus the manufacture time can be shortened.

Still furthermore, the earthen wallpaper can be made with a thickness of approximately 0.05 ∼ 5 mm by such a method thereby having superior efficacies such as blockage of harmful toxicity of cement, control of temperature or humidity, absorption of smell, antibacterial action, anti-mold action, emission of far infrared ray, purification of air, blockage of electromagnetic waves, prevention from spreading of flame and emitting of toxic gas in a fire, etc. Even in other purposes, the earthen wallpaper has the above-mentioned superior efficacies.

Meanwhile, although the earthen wallpaper does not almost vary in a shape before or after processing, it varies in a color after processing according to a kind or proportion of the first material (1) as mentioned above. Furthermore, it is desirable that, in case the proportion of mixing the first material (1) of ocher, elvan stone, ceramic and others (charcoal, etc.) and the natural adhesives (including water) is between 1-3 : 0.3-0.75, the earthen wallpaper be used even as lining paper or various seat interior material, while in case the proportion of mixing the first material (1) of ocher, elvan stone, ceramic and others (charcoal, etc.) and the natural adhesives (including water) is between 1-3 : 0.5-1, the earthen wallpaper can be used even as shoe soles.

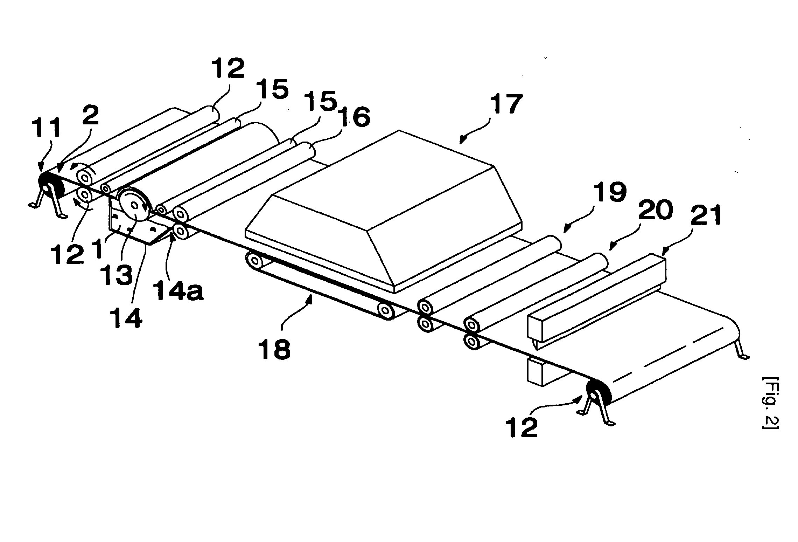

Several embodiments of an apparatus for manufacturing an earthen wallpaper according to the present invention are similar to those disclosed in Korean Patent No.10-509,454(registered on August 12, 2005) issued to the same applicant, and are illustrated with reference to Figs. 2, and 7 to 10 of schematical construction drawings as follows.

First, an apparatus manufacturing the earthen wallpaper of the present invention with mass production, as shown in Fig. 2, supplying means (11,12) for supplying the second material (2), a first material tank (14) for supplying the first material (1), a permeation guide roller (13), a pair of thickness-control and mixture-leveling rollers (16), a drying furnace (17), and a pair of rear transportation and first levelling rollers (19) and/or a pair of second levelling rollers (20), said apparatus being able to further comprise an inspection and cutting table (21) and a coiler (22).

The second material (2) is a short fiber fabric such as rayon, diaper, other sanitary fiber, etc. For supplying the second material (2) in a roll type, the supplying means comprises an uncoiler (11) and an uncoiling-control roller (12), as shown. For supplying the second material (2) in a plate shape, a palette, a pusher, etc., may be included, but not shown.

The first material tank (14) contains 60-95 wt% of a first material (1) selected from the group of natural mineral powders of 200-1000 mesh consisting of ocher, ocher ceramic (ocher processed at a high temperature above 1,000°C), talcum, jade, purple jade, white earth, zeolite, elvan stone, and a mixture of two or more thereof (referred to as a soil mixture below) with being mixed in a mixed solution of the water-soluble bonding agent and the natural bonding agent in proper proportion. For additional desirable functions at need, natural mineral powders such as □□□□, silver, gold, copper, etc., and plant powders of green tea, charcoal (bamboo, oak, etc.), and herb or their extracts can be added and mixed.

Preferably, the extension part (14a), as shown in Fig. 2, may be comprised so that the remaining mixture of the first material (1) flows into the main first material tank (14) after the thickness of the first material (1) being permeated into, and covering, the second material (2) is controlled by the thickness-control and mixture-leveling rollers (16).

As shown, the second material (2) is guided by and passed in contact with an upper part of the permeation guide roller (13) which is rotating, and said permeation guide roller (13) is dipped in the first material tank (14) in the lower part, so as to dip the second material (2) in the first material (1) and to permeate the first material (1) into the second material (2) and cover the second material (2) with the first material (1). Also, the permeation guide roller (13) is not limited to such a construction, but can be constructed so as for the second material (2) to pass in contact with the lower part thereof, as in the after-mentioned embodiments.

Said pair of thickness-control and mixture-leveling rollers (16) make the first material (1) distributed uniformly over the whole area of the second material (2) by passing the first material (1) and the second material (2) combined and compressed as one body through a constant gap right after compressing the first material (1) permeated into, and covering the front and rear surfaces of, the second material (2) and combining the first material (1) and the second material (2), while making the remaining first material (1) returned, thereby making the thickness of the earthen wallpaper constant and uniform. Furthermore, a front and/or rear assistant roller (15) may be additionally comprised after and/or before the permeation guidance roller (13) so as for the second material (2) to be transported exactly for permeation of the first material (1).

In Fig. 2, rear transportation and first levelling rollers (19) may be provided for passing the first material (1) and the second material (2) as one body through a first drying furnace (17) without any interference and without any guide roller after the thickness-control and mixture-leveling rollers (16), and/or a transportation conveyor (18) may be included for transporting the first material (1) and the second material (2) combined as one body so as to completely dry it by passing it through the first drying furnace (17) without any relative movement after once contacting into the conveyor. Also, second levelling rollers (20) may be further comprised for levelling a dried product.

Preferably, an inspection and cutting table (21) and a coiler (22) may be additionally included after the second levelling roller (20) so as to cut the dried product into a constant size, and so as to inspect it for producing the dried and levelled earthen wallpaper of a constant size.

A method of manufacturing the earthen wallpaper by the above-mentioned apparatus for mass-production will be described in detail together with Fig. 1.

The preparing step is performed by mounting the second material (2) of a roll type onto the uncoiler (11) in step S1 and containing the first material (1) in the first material tank (14) in step S2, and then, when the apparatus is operated, the step of uncoiling the second material (2) from the roll with passing through the uncoiling-control roller (12) and controlling a transportation speed is performed (step S2).

Subsequently, the first material (1) contained in the first material tank (14) is permeated into the second material (2) by means of the permeation guide roller (13) with the second material (2) guided by means of the assistant rollers (15) after and/or before the step of permeating the first material so as for the second material (2) to be transported exactly to the first material (1) for permeation(in step S4). Then, in step S5, the first material (1) permeated into, and covering, the second material (2) is evenly distributed by means of the thickness-control and mixture-leveling roller (16) after the rear guiding step, and the remaining first material (1) after being controlled and levelled flows into the main first material tank (14) through the extension part (14a).

Then, in the inspection and cutting table (21), the dried product is cut into a constant size, and inspected for producing the dried and levelled earthen wallpaper of a constant size (step S9). When the cutting is not necessary, only inspection is performed, and then, the production is completed by coiling the product on the coiler (22) for a roll type and wrapping it (step 10).

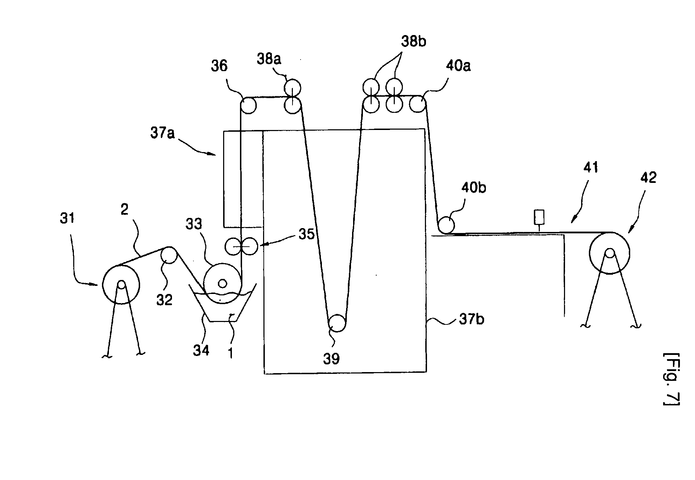

The feature in the embodiments of the apparatus of the present illustrated in Figs. 7 to 10, is to comprise a pair of upper transportation and levelling rollers (38a,58a) and/ or a transportation roller (76b) for vertically drawing and transporting the second material (2) with the first material (1) as one body by means of a guide roller (36,56,76a) so as to pass the first drying furnace (37a,57a,77a) without any interference. Also, a far infrared-ray ceramic heater (90) is installed in the first drying furnace (37a,57a,77a) for heating the second material (2) with the first material (1) so as to minimize interference by hot wind during the transportation.

A second drying furnace (37b,57b,77b) is provided for completely drying the second material (2) with the first material (1) by being raised and descended approximately in a V or U letter shape therein by means of the guide roller (39,59,79,79a) and the transportation and levelling roller (38b,58b,78,78a) arranged after the upper transportation and levelling rollers (38a,58a) and/or the transportation roller (76b). When a pair of transportation and levelling rollers is installed approximately before and after the V or U letter shape, the transportation speed can be maintained constant.

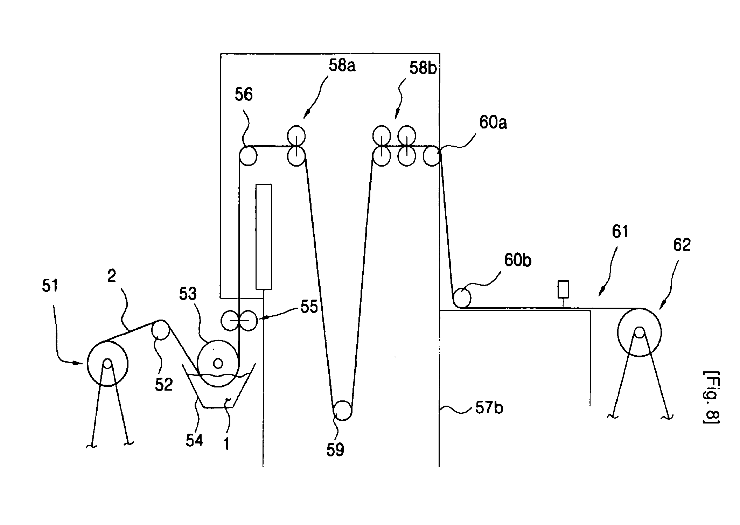

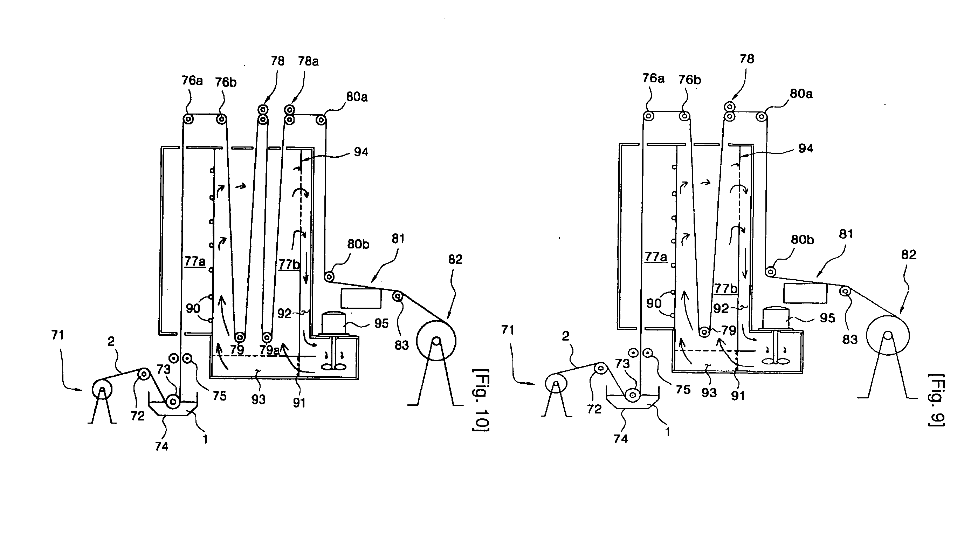

In Figs. 9 and 10, the second drying furnace (77b) is structured to circulate hot wind by comprising a partition wall (94) and a hot-wind circulation fan (95), by which the hot wind passing a heater (91) in a lower passage (93) flows up and then returns to a return room (92). The second furnaces (37b,57b) of Figs. 7 and 8 can be similarly constructed in the hot-wind circulation structure.

Further, as in Figs. 7, 9 and 10, the guide roller (36,76a), the transportation and levelling rollers (38a,38b,78,78a) and/or the transportation roller (76b) can be installed outside the drying furnace so as to cool the second material (2) with the first material (1) dried and combined and so as to facilitate removal of dust, etc., and maintenance, or can be installed inside as shown in Fig. 8 in order to prevent heat waste and increase drying efficiency. In the former case, it is possible to check at the middle whether the earthen wallpaper is properly manufactured since the earthen wallpaper is completely exposed before being dried completely.

In the embodiment of the apparatus of the present illustrated in Fig. 10, the second material (2) combined as one body with the first material (1) is raised and descended approximately in a V or U letter shape and dried, but, without any limitation to it, drying can be performed with the second material (2) reciprocating at plural times relating to its transportation speed, drying speed, etc.

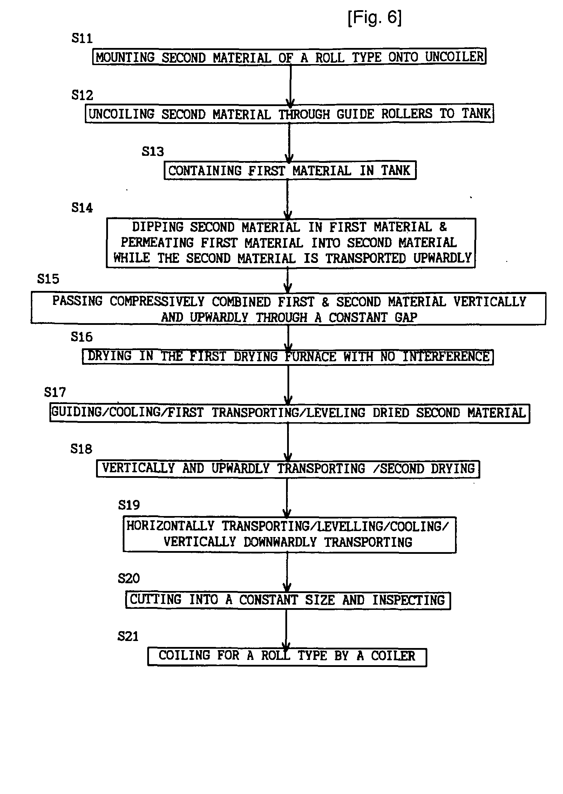

A method of manufacturing the soil wallpaper material by the above-mentioned apparatus having such a structural feature according another embodiments will be described in detail together with Fig. 6

In step S11 to step S 13, the preparing step is performed by mounting the second material (2) of a roll type onto the uncoiler (31,51,71), containing the first material (1) in the first material tank (34,54,74), uncoiling the second material (2) by the upper transportation and levelling rollers (38a,58a) and/or the transportation roller (76b) through the guide rollers (32,52,72) from the uncoiler (31,51,71) and winding a little the second material (2) to the coiler (42,62,82) with passing the whole line. Then, when the apparatus is operated, the step of uncoiling the second material (2) by the upper transportation and levelling rollers (38a,58a) and/or the transportation roller (76b) through the guide rollers (32,52,72) from the uncoiler (31,51,71), and then winding a little the second material (2) may be performed (step S12). Thus, in the uncoiler (31,51,71) of Figs. 7 to 10, the second material (2) can be uncoiled by the upper transportation and levelling rollers (38a,58a) and/or the transportation roller (76b) with no need to control the speed.

Then, in step S 14, the first material (1) contained in the first material tank (34,54,74) is permeated into the second material (2) by means of the permeation guide roller (33,53,73). That is, while the second material (2) is transported upwardly by the upper transportation and levelling rollers (38a,58a) and the transportation roller (76b) after passing a lower surface part of the permeation guide roller (33,53,73), the second material is dipped in the first material (1) in the tank, which is permeated into the second material through opposite surfaces of the second material (2). Just thereafter, in step 15, the second material (2) with the first material (1) as one body is vertically and upwardly passed through a constant gap between the thickness-control and mixture-leveling rollers (35,55,75). Just thereafter, in step 15, the second material (2) permeated by, and covering the opposite surfaces with, the first material (1) by dipping is vertically and upwardly passed through a constant gap between the thickness-control and mixture-leveling rollers (35,55,75), so as to make the thickness of the earthen wallpaper constant and uniform, and so that the remaining first material (1) flows into the lower first material tank. Preferably, the gap between the thickness-control and mixture-leveling rollers (35,55,75) is controlled so as to control a thickness of an earthen wallpaper.

Subsequently, while the second material (2) with the first material (1) covered the opposite surfaces thereof and permeated thereinto and with the thickness controlled is vertically and upwardly transported, the first material (1) and the second material (2) as one body are dried in the first drying furnace (37a,57a,77a), particularly by the far infrared-ray ceramic heater with no interference at a temperature of 80°C∼180°C (step S16). Thus, the first material (1) of the front and rear first material layer (3,4) does not flow because of being dried with no interference, and the uniform thickness formed by the thickness-control and mixture-leveling rollers (35,55,75) can be maintained constant as it is. Then, although the first material (1) comes in contact with the guide rollers (36,56,76a), the first material (1) can not be separated from the second material (2) by being dried to the extent that at least fluid and adhesion of the first material (1) does not occur, and thus, inferior products are not generated in the front and back first materials (3,4) formed with the first material (1). In step S17, the first material (1) and the second material (2) combined as one body continue being transported by means of the upper transportation roller (76b) through the guide rollers (36,56,76a), and levelling of the earthen wallpaper can be achieved.

Furthermore, in steps S 18 and S 19, the first material (1) and the second material (2) as one body are completely dried by being raised and descend approximately in a V or U letter shape by means of the guide rollers (39,59,79) under hot wind circulation at a temperature of 50°C∼120°C, and then is passed through the transportation and levelling rollers (38b,58b,78,78a) in the upper portion of the second drying furnace (37b,57b,77b), thereby being levelled and improving spatial efficiency. In Fig. 9 and Fig. 10, the hot wind passing through the heater (91) in the lower passage (93) of the second drying furnace (77b) flows up for drying the first material (1) which covers the opposite surfaces of, and permeated into, the second material (2), and then returns to the return room (92) for circulation by operation of the hot-air circulation fan (95). Thus, drying efficiency can be increased and drying even a deep inside of the earthen wallpaper is facilitated, thereby obtaining stabilization of the product. However, it is desirable that the drying time is limited to a short time within one hour so as not to destroy useful functions of ocher, etc.

Then, the dried earthen wallpaper is horizontally transported by means of the guide rollers(40a,40b,60a,60b,80a,80b), and, in the inspection and cutting table(41,61,81), the dried product is cut into a constant size, and inspected for producing the dried and levelled earthen wallpaper of a constant size (step S20). When the cutting is not necessary, only inspection is performed and then, the production is completed by coiling the product on the coiler (42,62,82) for a roll type of the earthen wallpaper (5a) as shown in Fig. 4 and wrapping it (step 21). The sectional structure of the earthen wallpaper is as explained above in connection with Fig. 5.

## Claims

1. An earthen wallpaper which comprises a first material (1) in 60-95 % by weight selected from the group of natural mineral powders of 200-1000 mesh consisting of ocher, ocher ceramic, talcum, jade, purple jade, white earth, zeolite, amphibole, elvan stone, and a soil mixture of two or more thereof, and a second material (2) of a short fiber fabric in 3-35 wt%, and a water-soluble or natural bonding agent in 2-5 wt% remained as a non-volatile component after drying.

2. An earthen wallpaper as claimed in Claim 1, wherein the second material (2) is dipped in the mixture solution of the first material (1) and the bonding agent, the first material (1) being permeated into the inside and the outer surfaces of the second material (2) of the short fiber fabric, the first material (1) being compressively dried, and thus the first material (1) comprises front and rear first material layers (3,4) covering the opposite surfaces of the second material (2) and a permeated first material layer (2a) penetrated between fibrous elements (2b) of the second material (2).

3. An earthen wallpaper as claimed in Claim 1 or 2, wherein a mixture of a natural bonding agent and a water-soluble bonding agent in a proportion of 1∼2.5 : 1 is used as said bonding agent, and the first material (1) further comprises natural mineral powders such as illite, silver, gold, copper, and plant powders of green tea, charcoal and herb or their extracts so as to vary a color and a quality of an earthen wallpaper, and levels in emission of far infrared rays, control of a temperature or a humidity and absorption of electromagnetic waves according to the kind and proportion of the first material.

## Patentansprüche

1. Irdene Tapete, umfassend ein erstes Material (1) mit einem Anteil von 60-95 Gewichtsprozent, ausgewählt aus der Gruppe natürlicher mineralischer Pulver mit 200-1000 Mesh Siebkörnung bestehend aus Ocker, Ocker-Keramik, Talkum, Jade, Violett-Jade, weißer Erde, Zeolithe, Amphibol, Elvan-Gestein und Erdmischungen aus zwei oder mehreren daraus, ein Kurzfasergewebe als zweites Material (2) mit einem Anteil von 3-35 Gew.-% und ein wasserlösliches oder natürliches Bindemittel mit einem Anteil von 2-5 Gew.-%, das nach dem Trocknen als nichtflüchtige Komponente verbleibt.

2. Irdene Tapete nach Anspruch 1, wobei das zweite Material (2) in die Mischlösung aus erstem Material (1) und Bindemittel eingetaucht wird, wobei das erste Material (1) in das Innere und in die Außenflächen des kurzfaserigen Gewebes des zweiten Materials (2) einzieht, und das erste Material (1) unter Druckeinwirkung getrocknet wird, wodurch das erste Material (1) eine vorder- und rückseitige Schicht aus dem ersten Material (3, 4) umfasst, welche die gegenüberliegenden Oberflächen des zweiten Materials (2) bedecken, sowie eine eingezogene Schicht aus dem ersten Material (2a), welches zwischen die Faserelemente (2b) des zweiten Materials (2) eingedrungen ist.

3. Irdene Tapete nach Anspruch 1 oder 2, wobei als Bindemittel ein Gemisch aus einem natürlichen Bindemittel und einem wasserlöslichen Bindemittel im Verhältnis von 1-2,5 : 1 verwendet wird, und wobei das erste Material (1) zusätzlich natürliche mineralische Pulver wie Illit, Silber, Gold, Kupfer und Pflanzenpulver aus grünem Tee, Holzkohle oder Kräutern oder deren Extrakte enthält, um Farbe und Beschaffenheit einer irdenen Tapete abzuwandeln sowie das Emissionsniveau von Ferninfrarotstrahlung, und um die Temperatur oder Feuchtigkeit und die Absorption an elektromagnetischer Strahlung zu beeinflussen, in Abhängigkeit von Art und Anteil des ersten Materials.

## Revendications

1. Papier peint de glaise qui comprend un premier matériau (1) à 60 à 95 % en poids sélectionné parmi le groupe de poudres minérales naturelles de 200 à 1000 mailles constitué de l'ocre, la céramique d'ocre, le talc, le jade, le jade pourpre, la terre blanche, la zéolite, l'amphibole, la pierre d'Elven et un mélange terreux de deux de ceux-ci ou plus, et un second matériau (2) d'un tissu de fibres courtes à 3 à 35 % en poids, et un liant hydrosoluble ou naturel à 2 à 5 % en poids demeurant en tant que composant non volatile après séchage.

2. Papier peint de glaise selon la revendication 1, dans lequel le second matériau (2) est trempé dans la solution de mélange du premier matériau (1) et du liant, le premier matériau (1) étant imprégné vers l'intérieur et les surfaces externes du second matériau (2) du tissu de fibres courtes, le premier matériau (1) étant séché de manière compressive, et le premier matériau (1) comprend ainsi des premières couches de matériau avant et arrière (3, 4) recouvrant les surfaces opposées du second matériau (2) et une première couche de matériau imprégnée (2a) qui pénètre entre des éléments fibreux (2b) du second matériau (2).

3. Papier peint de glaise selon la revendication 1 ou 2, dans lequel un mélange d'un liant naturel et d'un liant hydrosoluble dans une proportion de 1∼2,5/1 est utilisé en tant que ledit liant, et le premier matériau (1) comprend en outre des poudres minérales naturelles telles que l'illite, l'argent, l'or, le cuivre, et des poudres végétales de thé vert, charbon et herbe ou leurs extraits de manière à faire varier une couleur et une qualité d'un papier peint de glaise, et des niveaux d'émission de rayons infrarouge lointain, la commande d'une température ou d'une humidité et l'absorption d'ondes électromagnétiques en fonction du type et de la proportion du premier matériau.
